# EUROPEAN PATENT APPLICATION

(11) **EP 2 618 536 A2**
(43) Date of publication of application: **24.07.2013**
(21) Application number: 12760841.2
(22) Date of filing: 25.04.2012
(51) Int. Cl.: H04L 29/06

(54) **METHOD AND DEVICE FOR UNIFYING FRAME RATES**

(71) Applicant: Huawei Technologies Co., Ltd., Shenzhen, Guangdong 518129 (CN)
(72) Inventor: OU, Shuxiong, Shenzhen, Guangdong 518129 (CN); XIANG, Hui, Shenzhen, Guangdong 518129 (CN); HUANG, Lu, Shenzhen, Guangdong 518129 (CN); ZHAO, Liye, Shenzhen, Guangdong 518129 (CN); GUO, Chan, Shenzhen, Guangdong 518129 (CN)
(74) Representative: Pfenning, Meinig & Partner GbR
(86) International application number: PCT/CN2012/074662
(87) International publication number: WO 2012/126409

(57) **Abstract**

The present invention provides a method and device for unifying frame rates. The method includes: performing rate increasing on at least one of OTU frames that have different frame rates, so that the OTU frames can be processed at a receiving end by using a clock signal of a same frequency point; and after the rate increasing is performed, sending, on a wavelength division line, the OTU frames that have different frame rates. According to embodiments of the present invention, a same local crystal oscillator may be used at the receiving end to provide a clock signal for received wavelength division service frames.

## Description

### FIELD OF THE INVENTION

The present invention relates to the field of optical communication technologies, and in particular to a method and device for unifying frame rates.

### BACKGROUND OF THE INVENTION

Existing optical channel transport units (Optical channel transport unit, OTU) which are of two service types and defined for a 40G wavelength division line are an OTU3 and an OTU3e2, rates of which are 43.01841356 Gbps and 44.58335558 Gbps, respectively. Two service rates differ greatly. At a receiving end, local crystal oscillators, namely voltage-controlled oscillators (Voltage-Controlled Oscillator, VCO), frequency points of which correspond to those of the OTU3 and the OTU3e2, need to be set, respectively. A wavelength division network needs a sampling clock of an ultrahigh frequency, where the sampling clock needs to have a certain proportional relationship with a service rate at a wavelength division side and is generated by a local crystal oscillator. Because multiple frequency points exist in an existing 40G wavelength division service rate, for example, two frequency points exist in the foregoing OTU3 and OTU3e2, multiple local crystal oscillators of high frequency points are needed to provide multiple high-frequency sampling clock signals, which increases the costs of a 40G wavelength division cable clip solution, layout difficulty, and cooperative processing difficulty of software and hardware.

### SUMMARY OF THE INVENTION

Embodiments of the present invention provide a method and device for unifying frame rates, which may unify frame rates of existing wavelength division services to an almost same frame rate, and eliminate an existing problem of non-uniform frequency points of a receiving end caused by different frame rates, thereby reducing implementation difficulty and the costs.

An embodiment of the present invention provides a method for unifying frame rates, where the method includes:
performing rate increasing on at least one of OTU frames that have different frame rates, so that the OTU frames can be processed at a receiving end by using a clock signal of a same frequency point; and
after the rate increasing is performed, sending, on a wavelength division line, the OTU frames that have different frame rates.

An embodiment of the present invention provides a method for unifying frame rates, where the method includes:
providing a clock signal of a single frequency point for different received service data, where at least one type of the service data has undergone rate increasing at a sending end;
performing DSP and CDR processing on the service data by using the clock signal of the single frequency point;
determining a type of the received service data;
decapsulating and deframing the service data that has undergone the rate increasing and has been processed by using the clock signal of the single frequency point;
deframing service data that has not undergone the rate increasing and has been processed by using the clock signal of the single frequency point; and
choosing, according to the determined type of the service data, to output the data that has been decapsulated and deframed or the data that has been deframed.

An embodiment of the present invention provides a sending device, including:
an encapsulating module, configured to perform rate increasing on at least one of OTU frames that have different frame rates, so that the OTU frames can be processed at a receiving end by using a clock signal of a same frequency point; and
a sending module, configured to: after the rate increasing is performed, send, on a wavelength division line, the OTU frames that have different frame rates.

An embodiment of the present invention provides a receiving device, including:
a local crystal oscillator, configured to provide a clock signal of a single frequency point for different received service data, where at least one type of the service data has undergone rate increasing at a sending end, the service data obtained after rate increasing processing is an OTU frame obtained in a self-framing manner, and a structure of the OTU frame obtained after the rate increasing is different from that of an OTU frame before the rate increasing;
a processing module, configured to perform DSP and CDR processing on the service data by using the clock signal of the single frequency point;
a determining module, configured to determine a type of the received service data according to a frame format by using hardware;
a decapsulating and deframing module, configured to decapsulate and deframe the service data that has undergone the rate increasing and has been processed by using the clock signal of the single frequency point;
a deframing module, configured to deframe service data that has not undergone the rate increasing and has been processed by using the clock signal of the single frequency point; and
a choosing module, configured to choose, according to the type of the service data determined by the determining module, to output the data that has been decapsulated and deframed or the data that has been deframed.

It may be known from the foregoing technical solutions that, according to the embodiments of the present invention, the rate increasing is performed on at least one of the OTU frames that have different frame rates, so that the receiving end can process the received OTU frames by using the clock signal of the same frequency point, which may implement frequency point normalization at the receiving end. Therefore, only one local crystal oscillator needs to be setset at the receiving end, which avoids a problem caused by separately settingsetting multiple local crystal oscillators in the prior art, reduces the costs of a wavelength division cable clip, and reduces layout difficulty.

### BRIEF DESCRIPTION OF THE DRAWINGS

To describe the technical solutions in the embodiments of the present invention more clearly, the following briefly introduces the accompanying drawings required for describing the embodiments. Apparently, the accompanying drawings in the following description show some embodiments of the present invention, and a person of ordinary skill in the art may still derive other drawings from these accompanying drawings without creative efforts.
FIG. 1 is a schematic flow chart of a method for unifying frame rates according to an embodiment of the present invention;
FIG. 2 is a schematic structural diagram of an OTU3 stuff frame according to the present invention;
FIG. 3 is a schematic structural diagram of a sending end according to the present invention;
FIG. 4 is a schematic flow chart of a method for unifying frame rates according to another embodiment of the present invention;
FIG. 5 is a schematic structural diagram of a receiving end according to the present invention;
FIG. 6 is a schematic structural diagram of a sending device according to an embodiment of the present invention;
FIG. 7 is a schematic structural diagram of a receiving device according to an embodiment of the present invention; and
FIG. 8 is a schematic structural diagram of an OTN system according to an embodiment of the present invention.

### DETAILED DESCRIPTION OF THE EMBODIMENTS

To make the objectives, technical solutions, and advantages of the present invention more comprehensible, the following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without making creative efforts shall fall within the protection scope of the present invention.

In optical network communication, a client at one end may send data to a client at the other end through an optical fiber. In the optical network communication, there may be a customer side and a wavelength division side. The customer side includes a device configured to generate customer data, such as a terminal device. The wavelength division side includes a device which encapsulates the customer data into an OTN frame, and a device and an optical fiber for transmitting the OTN frame. Therefore, two customer sides may implement the optical network communication through the wavelength division side between them.

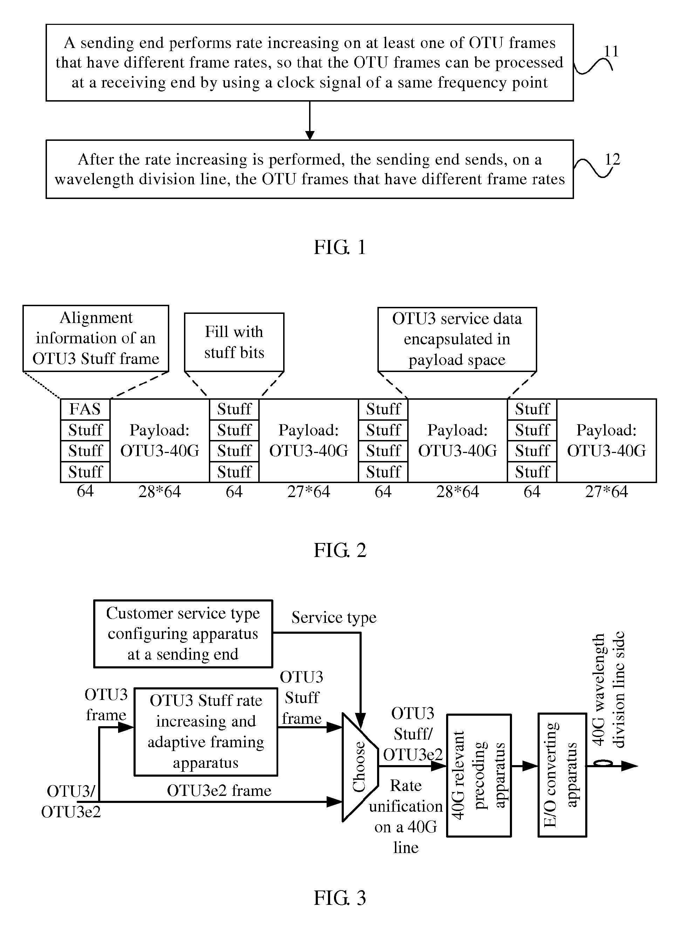

FIG. 1 is a schematic flow chart of a method for unifying frame rates according to an embodiment of the present invention, where the method includes:
Step 11: A sending end performs rate increasing on at least one of OTU frames that have different frame rates, so that the OTU frames can be processed at a receiving end by using a clock signal of a same frequency point.

For example, frames to be sent by the sending end are an OTU3 frame and an OTU3e2 frame. Because frame rates of these two frames differ greatly, two VCOs needs to be setset at a receiving end in the prior art.

However, in this embodiment, rate increasing may be performed on the OTU3 frame at the sending end, so that a frame rate of the OTU3 frame obtained after the rate increasing is almost the same as a frame rate of the OTU3e2. In this way, a VCO may be setset at the receiving end to perform processing on the OTU3 frame obtained after the rate increasing and the OTU3e2 frame.

Specifically, a frame obtained after the rate increasing is performed on the OTU3 frame may be referred to as an OTU3 stuff frame, where a frame rate of the OTU3 stuff frame is 57/55 times of a frame rate of the OTU3 frame.

The frame rate of the OTU3 frame is 43.01841356 Gbps, and has a great difference with the frame rate of the OTU3e2 frame, 44.58335558 Gbps. However, the frame rate of the OTU3 stuff frame is 57/55 times of the frame rate of the OTU3 frame, so that the frame rate of the OTU3 stuff frame, 44.58271951 Gbps, is close to and almost the same as the frame rate of the OTU3e2 frame. Therefore, a same local crystal oscillator may be used at the receiving end to provide the clock signal for the OTU3 stuff frame and the OTU3e2 frame, and thereby the rates are unified and frequency points are normalizd.

The OTU3 stuff frame is a self-framing frame. The self-framing frame refers to a frame that has a determined format, for example, that has a determined length and each component part of the frame has a determined length and position. Further, a format of the OTU3 stuff frame may be different from a structure of the OTU3 frame. However, according to an existing protocol, a format of the OTU3 frame is the same as that of the OTU3e2 frame, therefore, it may be directly determined, at the receiving end and according to a frame format, whether a received frame is the OTU3 stuff frame or the OTU3e2 frame.

Further, during encapsulation, a stuff bit may be inserted between OTU3 service data to reduce a jittering problem. For example, referring to FIG. 2, a structure of the OTU3 stuff frame may be as shown in FIG. 2. A stuff part (stuff) is used to be filled with a stuff bit, while a payload part (payload) is used to encapsulate the OTU3 service data. In FIG. 2, Bit is taken as the unit. After the encapsulation shown in FIG. 2, a ratio of the frame rate of the OTU3 stuff frame to the frame rate of the OTU3 frame is 57:55. In addition, rate increasing processing may also be performed on both the OTU3 frame and the OTU3e2 frame, so that the frames obtained after the rate increasing processing can be processed at the receiving end by the clock signal of the same frequency point.
Step 12: After the rate increasing is performed, the sending end sends, on a wavelength division line, the OTU frames that have different frame rates.

For example, referring to FIG. 3, at the sending end, an OTU3 service is encapsulated into the OTU3 stuff frame and sent on a 40G wavelength division line. For an OTU3e2 service, the OTU3e2 frame is directly sent on the 40G wavelength division line. The frame rate of the OTU3 stuff frame is almost the same as that of the OTU3e2 frame.

It may be understood that, the embodiment of the present invention is not limited to the OTU3 frame and the OTU3e2 frame, and may also be applied to an OTN frame at another rate level, so that different types of OTU frames at a same rate level have an almost same rate.

According to the embodiment of the present invention, the OTU3 frame is encapsulated into the OTU3 stuff frame, and the frame rate of the OTU3 stuff frame is 57/55 times of the frame rate of the OTU3 frame, so that the frame rate of the OTU3 stuff frame is almost the same as the frame rate of the OTU3e2 frame, which makes frame rates of 40G wavelength division services be unified, and therefore the same local crystal oscillator at the receiving end may be used to increase the clock signal for received 40G wavelength division service frames, avoiding a problem caused by using local crystal oscillators of two frequency points in the prior art, reducing the costs of a 40G wavelength division cable clip and reducing layout difficulty.

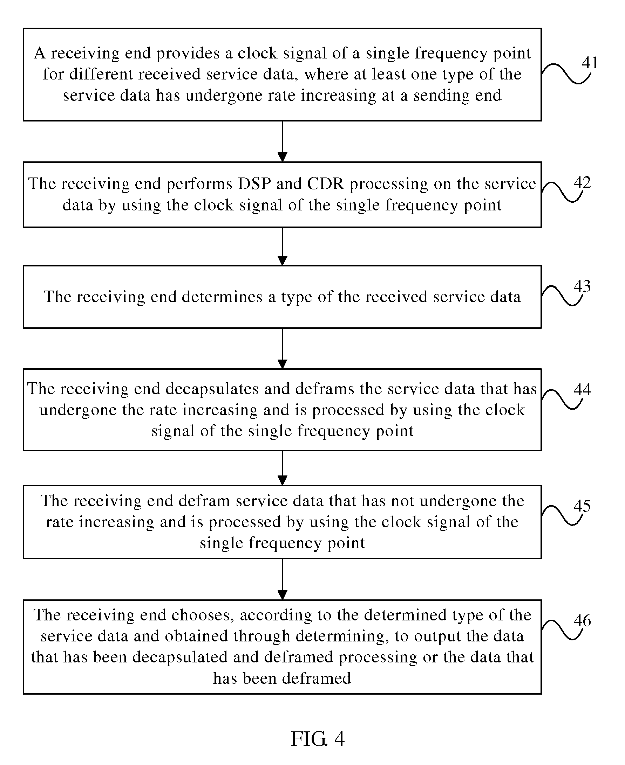

FIG. 4 is a schematic flow chart of a method for unifying frame rates according to another embodiment of the present invention, where the method includes:
Step 41: A receiving end provides a clock signal of a single frequency point for different received service data, where at least one type of the service data has undergone rate increasing at a sending end.

For example, the received service data is an OTU3 stuff frame and an OTU3e2 frame, where the OTU3 stuff frame is an OTU frame obtained after rate increasing is performed on an OTU3 frame, and a frame rate of the OTU3 stuff frame is 57/55 times of a frame rate of the OTU3 frame.
Step 42: The receiving end performs digital signal processing (Digital Signal Processing, DSP) and clock data recovery (Clock Data Recovery, CDR) processing on the service data by using the clock signal of the single frequency point.

At the sending end, after the OTU3 frame is encapsulated into the OTU3 stuff frame, the frame rate of the OTU3 stuff frame is almost the same as that of the OTU3e2 frame, and therefore the clock signal of the single frequency point may be used at the receiving end. The clock signal of the single frequency point may specifically be a clock signal for processing the OTU3e2 frame.

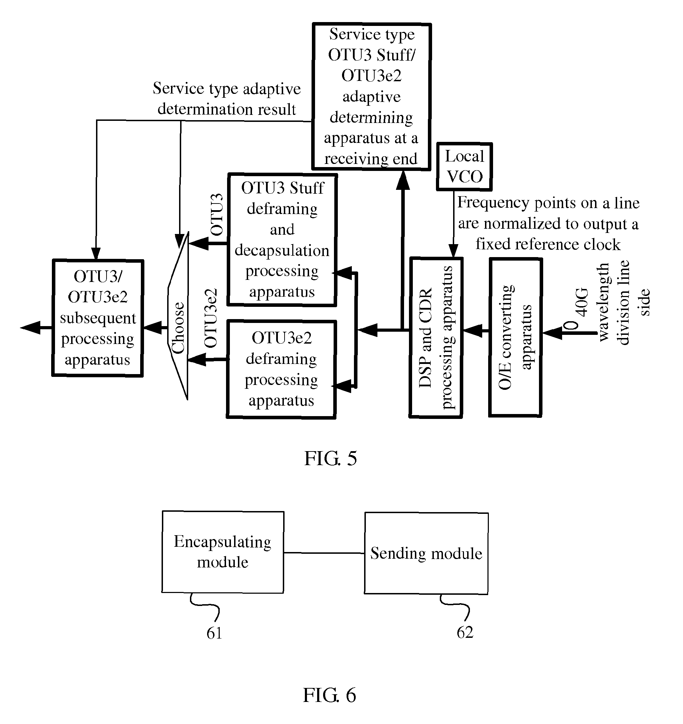

Referring to FIG. 5, because rates are uniform at the receiving end, a single local crystal oscillator is used, and a clock signal generated by the local crystal oscillator is provided for a digital signal processing (Digital Signal Processing, DSP) and clock data recovery (Clock Data Recovery, CDR) processing apparatus. The DSP and CDR processing apparatus may start to work based on the clock of the single frequency point, and may rapidly complete recovery of a service clock and data of a wavelength division line in a case that there is no need for software to perform configuration of service rate switching.

However, in the prior art, two local crystal oscillators exist at the receiving end, and correspond to an OTU3 service and an OTU3e2 service, respectively. A choosing module further exists between the local crystal oscillators and the DSP and CDR processing apparatus, and is configured to: according to a service type determined by software, choose one from clock signals provided by the two local crystal oscillators and then provide the chosen clock signal for the DSP and CDR processing apparatus.
Step 43: The receiving end determines a type of the received service data.

Because a frame transmitted on a 40G wavelength division line may be an OTU3 stuff frame or an OTU3e2 frame. Referring to FIG. 2, a format of the OTU3 stuff frame is different from that of the OTU3 frame before encapsulation. Because the format of the OTU3 frame is the same as that of the OTU3e2 frame, a frame format of the OTU3 stuff frame is different from that of the OTU3e2 frame, and therefore a service type may be determined according to the frame format. For example, a length of the OTU3 stuff frame is different from a length of the OTU3e2 frame.

The determining process may be implemented independently by hardware, and does not need VCO interface configuration, and therefore does not need participation of software. Service detection and type determination processing are rapidly completed, which greatly reduces service activation time and eliminates hardware and software coupling design in an existing solution. However, in the prior art, a manner of an attempt to switch a rate by software polling is used to obtain a real service rate, where service stabilization time is long, service recovery performance is often affected and excess of time for switching is caused, board software is needed to participate in the configuration of service rate switching, a strong coupling relationship exists between hardware design and software design, and difficulty in system design is great.
Step 44: The receiving end decapsulates and deframes the service data that has undergone the rate increasing and has been processed by using the clock signal of the single frequency point.

For example, when the received service data is an OTU3 stuff frame, the OTU3 stuff frame that has undergone DSP and CDR processing is decapsulated and deframed to obtain an OTU3 frame. A payload part of the OTU3 stuff frame as shown in FIG. 2 may be extracted, and data in the payload part forms the OTU3 frame.
Step 45: The receiving end deframes service data that has not undergone the rate increasing and has been processed by using the clock signal of the single frequency point.

For example, when the received service data is an OTU3e2, the receiving end may also obtain an OTU3e2 frame by deframing the OTU3e2 frame that has undergone the DSP and CDR processing.
Step 46: The receiving end chooses, according to the determined type of the service data, to output the data that has been decapsulated and deframed or the data that has been deframed.

For example, after it is determined that the service type is the OTU3 stuff frame, choose to output the OTU3 frame that has undergone the decapsulation and deframing processing. After it is determined that the service type is the OTU3e2 frame, choose to output the OTU3e2 frame that has undergone the deframing processing.

Further, after the type of the service data is determined, subsequent processing may be performed, which, for example, may also include:
The receiving end performs, according to the determined type of the service data, subsequent processing on the data that is chosen to be output.

For example, the receiving end performs subsequent processing on the OTU3 frame or the OTU3e2 frame according to the determined service type.

Similar to the prior art, in the prior art, after the deframing processing on the OTU3 frame and the OTU3e2 frame is completed, subsequent processing may be performed on the determined service type. Specific content of the subsequent processing, such as obtaining a communication overhead and collecting statistics about a bit error, may be the same as the processing performed after the type of an OTU frame is determined in the prior art.

According to the embodiment of the present invention, the OTU3 frame is encapsulated into the OTU3 stuff frame, and the frame rate of the OTU3 stuff frame is 57/55 times of the frame rate of the OTU3 frame, so that the frame rate of the OTU3 stuff frame is almost the same as the frame rate of the OTU3e2 frame, which makes frame rates of 40G wavelength division services be unified, and therefore the same local crystal oscillator at the receiving end may be used to increase the clock signal for received 40G wavelength division service frames, avoiding a problem caused by using local crystal oscillators of two frequency points in the prior art, reducing the costs of a 40G wavelength division cable clip and reducing layout difficulty and cooperative processing difficulty of software and hardware.

FIG. 6 is a schematic structural diagram of a sending device according to an embodiment of the present invention, where the sending device includes an encapsulating module 61 and a sending module 62. The encapsulating module 61 is configured to perform rate increasing on at least one of OTU frames that have different frame rates, so that the OTU frames can be processed at a receiving end by using a clock signal of a same frequency point. The sending module 62 is configured to: after the rate increasing is performed, send, on a wavelength division line, the OTU frames that have different frame rates.

Optionally, the OTU frames that have different frame rates are an OTU3 frame and an OTU3e2 frame, and the encapsulating module is specifically configured to perform rate increasing on the OTU3 frame, so that the OTU3 frame obtained after the rate increasing can be processed at the receiving end by using a clock signal which processes the OTU3e2 frame.

Optionally, the encapsulating module is specifically configured to encapsulate the OTU3 frame into an OTU3 stuff frame, where a frame rate of the OTU3 stuff frame is 57/55 times of a frame rate of the OTU3 frame.

Optionally, the encapsulating module is specifically configured to fill a part between a first bit part and a second bit part of the OTU3 frame with stuff bits, where the number of bits in the first bit part is 28*64, the number of bits in the second bit part is 27*64, and the number of bits of the stuff bits is 64.

Optionally, the OTU3 stuff frame obtained by the encapsulating module is a self-framing frame, and a structure of the OTU3 stuff frame is different from a structure of the OTU3 frame.

Optionally, the encapsulating module is specifically configured to perform rate increasing on all the OTU frames that have different frame rates, so that the OTU frames can be processed at the receiving end by using the clock signal of the same frequency point.

According to the embodiment of the present invention, the OTU3 frame is encapsulated into the OTU3 stuff frame, and the frame rate of the OTU3 stuff frame is 57/55 times of the frame rate of the OTU3 frame, so that the frame rate of the OTU3 stuff frame is almost the same as a frame rate of the OTU3e2 frame, which makes frame rates of 40G wavelength division services be unified, and therefore a same local crystal oscillator at the receiving end may be used to increase the clock signal for received 40G wavelength division service frames, avoiding a problem caused by using local crystal oscillators of two frequency points in the prior art, reducing the costs of a 40G wavelength division cable clip and reducing layout difficulty.

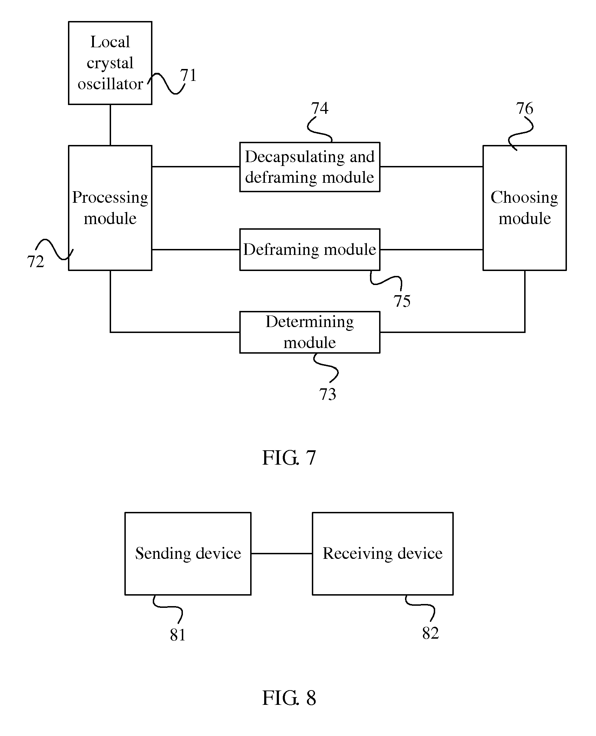

FIG. 7 is a schematic structural diagram of a receiving device according to an embodiment of the present invention, where the receiving device includes a local crystal oscillator 71, a processing module 72, a determining module 73, a decapsulating and deframing module 74, a deframing module 75, and a choosing module 76. The local crystal oscillator 71 is configured to provide a clock signal of a single frequency point for different received service data, where at least one type of the service data has undergone rate increasing at a sending end, the service data obtained after rate increasing processing is an OTU frame obtained in a self-framing manner, and a structure of the OTU frame obtained after the rate increasing is different from that of an OTU frame before the rate increasing; the processing module 72 is configured to perform DSP and CDR processing on the service data by using the clock signal of the single frequency point; the determining module 73 is configured to determine a type of the received service data according to a frame format by using hardware; the decapsulating and deframing module 74 is configured to decapsulate and deframe the service data that has undergone the rate increasing and has been processed by using the clock signal of the single frequency point; the deframing module 75 is configured to deframe service data that has not undergone the rate increasing and has been processed by using the clock signal of the single frequency point; and the choosing module 76 is configured to choose, according to the type of the service data determined by the determining module, to output the data that has been decapsulated and deframed or the data that has been deframed. Further, the device may further includes a module which is configured to: according to the determined type of the service data, perform subsequent processing on the data chosen to be output.

A frequency point of the local crystal oscillator is the same as a frequency point of a clock signal that performs processing on an OTU3e2 frame.

According to the embodiment of the present invention, an OTU3 frame is encapsulated into an OTU3 stuff frame, and a frame rate of the OTU3 stuff frame is 57/55 times of a frame rate of the OTU3 frame, so that the frame rate of the OTU3 stuff frame is almost the same as a frame rate of the OTU3e2 frame, which makes frame rates of 40G wavelength division services be unified, and therefore a same local crystal oscillator at a receiving end may be used to increase the clock signal for received 40G wavelength division service frames, avoiding a problem caused by using local crystal oscillators of two frequency points in the prior art, reducing the costs of a 40G wavelength division cable clip and reducing layout difficulty and cooperative processing difficulty of software and hardware.

FIG. 8 is a schematic structural diagram of an OTN system according to an embodiment of the present invention, where the system includes a sending device 81 and a receiving device 82. The sending device 81 may be specifically as shown in FIG. 6, and the receiving device 82 may be specifically as shown in FIG. 7.

According to the embodiment of the present invention, extraction processing is performed on at least one of OTU frames that have different frame rates, so that a receiving end can process received OTU frames by using a clock signal of a same frequency point, which may implement frequency point normalization at the receiving end, and therefore only one local crystal oscillator needs to be set at the receiving end, thereby avoiding a problem caused by separately setting multiple local crystal oscillators in the prior art, reducing the costs of a wavelength division cable clip and reducing layout difficulty and cooperative processing difficulty of software and hardware.

A person of ordinary skill in the art may understand that, all or part of the steps of the foregoing method embodiments may be implemented by a program instructing relevant hardware. The program may be stored in a computer readable storage medium. When the program is executed, the steps of the foregoing method embodiments are performed. The storage medium may be any medium that is capable of storing program codes, such as a ROM, a RAM, a magnetic disk, or an optical disk.

Finally, it should be noted that, the foregoing embodiments are merely intended for describing the technical solutions of the present invention other than limiting the present invention. Although the present invention is described in detail with reference to the foregoing embodiments, persons of ordinary skill in the art should understood that they may still make modifications to the technical solutions described in the foregoing embodiments, or make equivalent substitutions to part of the technical features; however, these modifications and substitutions do not make corresponding technical solutions depart from the scope of the technical solutions of the embodiments of the present invention.

## Claims

1. A method for unifying frame rates, comprising:
performing rate increasing on at least one of optical channel transport unit OTU frames that have different frame rates, so that the OTU frames can be processed at a receiving end by using a clock signal of a same frequency point; and
after the rate increasing is performed, sending, on a wavelength division line, the OTU frames that have different frame rates.

2. The method according to claim 1, wherein the OTU frames that have different frame rates are an OTU3 frame and an OTU3e2 frame, and the performing rate increasing on at least one of OTU frames that have different frame rates comprises:
performing rate increasing on the OTU3 frame, so that the OTU3 frame obtained after the rate increasing can be processed at the receiving end by using a clock signal that performs processing on the OTU3e2 frame.

3. The method according to claim 2, wherein the performing rate increasing on the OTU3 frame comprises:
encapsulating the OTU3 frame into an OTU3 stuff frame, wherein a frame rate of the OTU3 stuff frame is is 57/55 times of a frame rate of the OTU3 frame.

4. The method according to claim 3, wherein the encapsulating the OTU3 frame into an OTU3 stuff frame comprises:
filling a part between a first bit part and a second bit part of the OTU3 frame with stuff bits, wherein the number of bits in the first bit part is 28*64, the number of bits in the second bit part is 27*64, and the number of bits of the stuff bits is 64.

5. The method according to claim 3, wherein the OTU3 stuff frame is a self-framing frame, and a structure of the OTU3 stuff frame is different from a structure of the OTU3 frame.

6. The method according to claim 1, wherein the performing rate increasing on at least one of OTU frames that have different frame rates, so that the OTU frames can be processed at a receiving end by using a clock signal of a same frequency point comprises:
performing rate increasing on all the OTU frames that have different frame rates, so that the OTU frames can be processed at the receiving end by using the clock signal of the same frequency point.

7. A method for unifying frame rates, comprising:
providing a clock signal of a single frequency point for different received service data, wherein at least one type of the service data has undergone rate increasing at a sending end;
performing digital signal processing DSP and clock data recovery CDR processing on the service data by using the clock signal of the single frequency point;
determining a type of the received service data;
decapsulating and deframing the service data that has undergone the rate increasing and has been processed by using the clock signal of the single frequency point;
deframing service data that has not undergone the rate increasing and has been processed by using the clock signal of the single frequency point; and
choosing, according to the determined type of the service data, to output the data that has been decapsulated and deframed or the data that has been deframed.

8. The method according to claim 7, wherein the service data obtained after rate increasing processing is performed at the sending end is an OTU frame obtained in a self-framing manner, a structure of the OTU frame obtained after the rate increasing is different from that of an OTU frame before the rate increasing, and the determining a type of the received service data comprises:
determining the type of the received service data according to a frame format by using a hardware module.

9. The method according to claim 7 or 8, wherein the service data is an OTU3 stuff frame and an OTU3e2 frame, the OTU3 stuff frame is an OTU frame obtained after rate increasing is performed on an OTU3 frame, and a frame rate of the OTU3 stuff frame is 57/55 times of a frame rate of the OTU3 frame.

10. A sending device, comprising:
an encapsulating module, configured to perform rate increasing on at least one of optical channel transport unit OTU frames that have different frame rates, so that the OTU frames can be processed at a receiving end by using a clock signal of a same frequency point; and
a sending module, configured to: after the rate increasing is performed, send, on a wavelength division line, the OTU frames that have different frame rates.

11. The device according to claim 10, wherein the OTU frames that have different frame rates are an OTU3 frame and an OTU3e2 frame, and the encapsulating module is specifically configured to perform rate increasing on the OTU3 frame, so that the OTU3 frame obtained after the rate increasing can be processed at the receiving end by using a clock signal which processes the OTU3e2 frame.

12. The device according to claim 11, wherein the encapsulating module is specifically configured to encapsulate the OTU3 frame into an OTU3 stuff frame, a frame rate of the OTU3 stuff frame is 57/55 times of a frame rate of the OTU3 frame, and a structure of the OTU3 stuff frame is different form that of the OTU3 frame.

13. The device according to claim 10, wherein the encapsulating module is specifically configured to perform rate increasing on all the OTU frames that have different frame rates, so that the OTU frames can be processed at the receiving end by using the clock signal of the same frequency point.

14. A receiving device, comprising:
a local crystal oscillator, configured to provide a clock signal of a single frequency point for different received service data, wherein at least one type of the service data has undergone rate increasing at a sending end, the service data obtained after rate increasing processing is an optical channel transport unit OTU frame obtained in a self-framing manner, and a structure of the OTU frame obtained after the rate increasing is different from that of an OTU frame before the rate increasing;
a processing module, configured to perform digital signal processing DSP and clock data recovery CDR processing on the service data by using the clock signal of the single frequency point;
a determining module, configured to determine a type of the received service data according to a frame format by using hardware;
a decapsulating and deframing module, configured to decapsulate and deframe the service data that has undergone the rate increasing and has been processed by using the clock signal of the single frequency point;
a deframing module, configured to deframe service data that has not undergone the rate increasing and has been processed by using the clock signal of the single frequency point; and
a choosing module, configured to choose, according to the type of the service data determined by the determining module, to output the data that has been decapsulated and deframed or the data that has been deframed.
